(19) Europäisches Patentamt
European Patent Office
Office européen des brevets

(11) EP 1 552 536 B1

(12) EUROPEAN PATENT SPECIFICATION

(45) Date of publication and mention
of the grant of the patent:
**23.06.2010 Bulletin 2010/25**

(51) Int Cl.:
***H01B 12/06*** (2006.01)        ***H01B 12/16*** (2006.01)
*H01L 39/14* (2006.01)

(21) Application number: **03751833.9**

(22) Date of filing: **01.08.2003**

(86) International application number:
**PCT/US2003/024290**

(87) International publication number:
**WO 2004/013868 (12.02.2004 Gazette 2004/07)**

(54) **Termination for a triaxial superconducting cable**

Abschluss für ein triaxiales supraleitendes Kabel

Terminaison pour un cable triaxial supraconducteur

(84) Designated Contracting States:
**DE FR GB**

(30) Priority: **01.08.2002 US 400429 P**

(43) Date of publication of application:
**13.07.2005 Bulletin 2005/28**

(73) Proprietor: **SOUTHWIRE COMPANY**
**Carrollton**
**Georgia 30119 (US)**

(72) Inventors:
• **GOUGE, Michael, J.**
**Oak Ridge National Laboratory**
**MS 8071 Oak Ridge, TN 37831 (US)**
• **FISHER, Paul, W.**
**Oak Ridge National Laboratory**
**MS8071 Oak Ridge, TN 37831 (US)**
• **FOSTER, C., A.**
**Oak Ridge National Laboratory**
**MS8071 Oak Ridge, TN 37831 (US)**
• **COLE, M., J.**
**Oak Ridge National Laboratory**
**MS8071 Oak Ridge, TN 37831 (US)**
• **LINDSAY, David, L.**
**Carrollton, GA 30116 (US)**

(74) Representative: **Brandon, Paul Laurence et al**
**APPLEYARD LEES**
**15 Clare Road**
**Halifax HX1 2HY (GB)**

(56) References cited:
WO-A-02/23557          WO-A-02/25672
US-A- 3 843 830        US-A- 5 932 523
US-A1- 2002 038 719    US-B1- 6 225 565

• RASMUSSEN C N ET AL: "Optimization of termination for a high-temperature superconducting cable with a room temperature dielectric design" IEEE TRANSACTIONS ON APPLIED SUPERCONDUCTIVITY IEEE USA, vol. 9, no. 1, March 1999 (1999-03), pages 45-49, XP002381169 ISSN: 1051-8223
• RAHMAN M M ET AL: "HIGH-CAPACITY CABLE'S ROLE IN ONCE AND FUTURE GRIDS" IEEE SPECTRUM, IEEE INC. NEW YORK, US, vol. 34, no. 7, 1 July 1997 (1997-07-01), pages 31-35, XP000734054 ISSN: 0018-9235

**Description**

BACKGROUND OF THE INVENTION

FIELD OF THE INVENTION

The present invention relates to a method of terminating a superconducting cable as defined by claim 1.

DESCRIPTION OF THE BACKGROUND ART

Superconducting materials are those where the electric resistance approaches zero (1uv/cm) below a critical temperature, its value depending on the material. Superconductivity is defined within a critical surface, i.e. a graph or figure with its axes being temperature, electrical current and magnetic field. Thus, for a given working temperature there is a defined curve of critical current which is a function of the magnetic field generated and/or applied to the superconductor.

The best known superconductor materials are NbTi and $Nb_3Sn$, however their working temperature is only 4.2K, the boiling temperature of liquid helium. This is the main limitation to large scale application of these superconducting materials. Such superconductors are therefore used almost exclusively for winding of magnets. Manufactured from wires (NbTi and $Nb_3Sn$) or tapes ($Nb_3Sn$) with high critical current densities (3500 $A/mm^2$ 5 Tesla for NbTi), such winding of compact magnets provide the production of high fields (up to 18 Tesla) in large volumes.

These superconductor magnets are used for the formation of medical images by nuclear magnetic resonance (MRI) and for materials analysis by the same principle (NMR), the magnets for ore separation and research magnets for high fields, such as those used in large particle accelerators (SSC, HERA, KEK, etc.).

Oxide superconductors of higher critical temperatures were discovered in 1986. These are intermetallic compounds involving metal oxides and rare earths, with perovskite (mica) crystal structure. Their critical temperatures vary from 30K to approaching room temperature and their critical fields are above 60 Tesla. Therefore these materials are considered promising and may replace $Nb_3Sn$ and NbTi in the manufacture of magnets and find other applications not feasible with liquid helium, such as transmission of electricity. Such materials have not previously been available as wires, cables, films, tapes or sheets.

An oxide superconductor which enters the superconducting state at the temperature of liquid nitrogen would be advantageous for application in a superconducting cable having a cooling medium of liquid nitrogen. With such an application, it would be possible to simultaneously attain simplification of the thermal protection system and reduction of the cooling cost in relation to a superconducting cable which requires liquid helium.

A superconducting cable must be capable of transmitting high current with low energy loss in a compact conductor. Power transmission is generally made through an alternating current, and a superconductor employed under an alternating current would inevitably be accompanied by energy loss, generically called AC loss. AC losses such as hysteresis loss, coupling loss, or eddy current loss depends on the critical current density of the superconductor, size of filaments, the structure of the conductor, and the like.

Various types of superconducting cables have been experimentally produced using metallic superconductors to study the structures for reducing AC loss, such as a superconductor which comprises a normal conductor and composite multifilamentary superconductors which are spirally wound along the outer periphery of the normal conductor. The conductor is formed by clockwisely and counterclockwise wound layers of composite multifilamentary superconductors, which are alternately superimposed with each other. The directions for winding the conductors are varied every layer for reducing magnetic fields generated in the conductors, thereby reducing impedance and increasing current carrying capacity thereof. This conductor has a high-resistance or insulating layer between the layers.

When a cable conductor is formed using an oxide superconductor, the technique employed in a metal superconductor cannot be used. An oxide superconductor, i.e., a ceramic superconductor, is fragile and weak in mechanical strain compared with a metal superconductor. For example, the prior art discloses a technique of spirally winding superconductors around a normal conductor so that the winding pitch is equal to the diameter of each superconductor. However, when a superconducting wire comprising an oxide superconductor covered with a silver sheath is wound at such a short pitch, there is a high probability that the oxide superconductor will be broken, thereby interrupting the current. When an oxide superconducting wire is extremely bent, its critical current may also be greatly reduced. The cable conductor must be flexible to some extent to facilitate handling. It is also difficult to manufacture a flexible cable conductor from a hard, fragile oxide superconductor.

In the United States, there are approximately 5600 kilometres (3500 miles) of high-voltage underground power cables using copper conductors to provide electricity to large metropolitan areas. These cables are aging, and many will be replaced over the next 20 years. Also, metropolitan areas continue to grow requiring new cable capacity. Electric utility companies are looking for new cable technologies that increase power density, reduce losses and costs while maintaining the high reliability of conventional cables. Superconducting cables have the potential to meet these challenging requirements.

The cost of installing a new cable in a metropolitan area is expensive. The cable accounts for about 30% to 50% of the costs and installation is the major remaining cost. A superconducting cable can replace existing copper cables and increase the power density by a factor of 3 to 8. The existing predominant cable design is a highpressure oil-filled pipe-type cable consisting of a steel pipe 10.1 to 20.3 cm (4" to 8") in diameter housing three copper cables and oil. These old copper cables and oil can be removed and replaced with superconducting cables with a significantly higher current capability saving the installation costs of a new cable system.

The superconducting cable offers a new application of cables to metropolitan areas. With existing technology, high-voltage copper cables transmit power from the outskirts of cities to the downtown area, where transmission substations lower the voltage and distribution circuits deliver power to customers. With this new superconducting technology, low-voltage high-current superconducting cables can transmit power to downtown areas, allowing utility companies to move the high-voltage transmission substations out of the downtown area. These substations are very expensive to install and maintain in downtown areas where land costs range from $100 to $600 per square foot (0.0929 m$^2$).

WO-A-02/25672 discloses a method of terminating a superconducting cable, the method comprising connecting phase and shield conductors to copper pipes at ambient temperature.

The present invention has successfully shown the utility application of superconducting cables at distribution voltages and high currents. Potential utility applications include: 1) substation to customer, 2) substation to substation, 3) extended substation bus, 4) substation express feeder, 5) generating unit to step-up transformer.

SUMMARY OF THE INVENTION

An object of the present invention is to provide a method for terminating, or connecting a superconducting cable having three-phase conductors and cooling channels arranged concentrically.

The foregoing and other objects, features, aspects and advantages of the present invention will become more apparent from the following detailed description of the present invention when taken in conjunction with the accompanying drawings.

The present invention provides a method of terminating a superconducting cable for alternating current having phase and neutral conductors, cooling channels, and an outer encircling shield, wherein a common neutral is provided for all three phase conductors and the phase conductors and the cooling channels are arranged concentrically, **characterised in that** the method comprises the steps of connecting the three-phases to copper pipe phase conductors at ambient temperature, and connecting the shield to a copper shield conductor at ambient temperature wherein the ambient temperature end of the termination is cooled by water or by glycol and water.

Other features of the invention will be apparent from the dependent claims, and the description which follows.

BRIEF DESCRIPTION OF THE DRAWINGS

FIG. 1 is a sectional view showing three-phase superconducting cables.
FIG. 2 is a perspective view showing a concentric three-phase superconductor.
FIG. 3 is a radial temperature profile of a superconductor's termination.
FIG. 4 is a graph showing the thermal conductivity of the termination dielectric material.
FIG. 5 shows the ANSYS predictions for temperature distribution in the termination.
FIG. 6 is a perspective partial-sectional view of the three-phase termination of the present invention.

DESCRIPTION OF THE PREFERRED EMBODIMENTS

The present invention relates to a method of terminating a high temperature superconductor cable which may be used in the shielded or unshielded form of construction. There are many applications where both shielded and unshielded cables serve useful purposes.

A modification of this embodiment is to insulate the cable with dielectrics over the high temperature superconductor tapes and then provide another high temperature superconductor layer over the dielectric. The entire cable is then either introduced into a cryostat of the type described above or a cryostat is constructed over the cable. This coaxial construction forces the magnetic field to stay between the inner and the outer layers of high temperature superconductor tapes. There is substantially no magnetic field outside the high temperature superconductor tapes and therefore there is no eddy current in the outer metallic enclosures. With this construction very large amounts of current can be carried depending upon the number of tapes present in the cable. The limitation in this cable design is that the dielectric remains at the cryogenic temperature and a material which can withstand the cryogenic temperature without any physical and mechanical degradation has to be used. The polymeric dielectric material employed in one embodiment has good physical and mechanical properties at liquid nitrogen and lower temperatures. It has high dielectric strength and high breakdown voltage. Advantageously the cable employed in the present invention includes the use of a flexible stainless steel corrugated pipe, which is optionally covered with a wire braid or mesh. Preferably, the corrugated pipe is drilled with holes of a size and pattern to allow the liquid nitrogen to flow into the butt gaps of the high temperature superconductor tapes and flood the dielectric material. The high temperature superconductor tapes are laid in a special manner to simulate two layer construction allowing maximum current to flow through the cable.

The dielectric material advantageously consists of semi-conductive tape, aluminized shield tape, and polymeric dielectric tapes. An unshielded cable can be constructed by omitting the outer layers of high temperature superconductor tapes. The present invention includes methods of terminating both shielded and unshielded high temperature superconductor cable. The design differs from other known cables in the case of an unshielded cable where an extrusion of dielectric material is performed over the thermal insulation cryostat. The prior art does not disclose any method of construction for shielded high temperature superconductor cable.

A superconductor cable terminated by the method of the present invention suitably has a flexible, evacuated double walled, outer pipe, through which liquid nitrogen flows to a chiller. A ground-potential superconductive shield material encircles the dielectric and shield layer, which in turn surrounds the current carrying superconductive material. The flexible, porous-walled inner pipe is encircled by the superconducting material and provides a central, tube-like portion for transport of liquid nitrogen from the chiller. Suitably, the pipe further has a braided surface that contacts the superconductive material.

Suitably, an unshielded cable has a former surrounded by semiconductive bedding tape, upon which is laid a superconductive tape. Another layer of semiconductive bedding tape surrounds the superconductor tape. A shielding layer encircles the bedding tape and a dielectric layer surrounds the shielding layer. The dielectric layer is encircled by a shield layer which in turn is encircled by a semiconductive bedding layer. The bedding layer is surrounded by a binder tape, which is encompassed by a centering ring, in turn surrounded by the jacketed cryostat.

Suitably, in a shielded cable a jacketed cryostat encompasses a centering ring, which surrounds a binder tape, which in turn encircles a semiconductive tape. The tape encircles a superconductive tape, which surrounds the semi-conductive bedding tape, which encompasses the shielding layer. A dielectric encircles the shield layer, which surrounds a semiconductive tape. Superconductive tape encircles the semiconductive bedding tape, which surrounds the former.

The present invention suitably relates to a method of terminating a cable employing an oxide superconductor comprising a flexible core member, a plurality of tape-shaped oxide superconducting wires laid on said core member with tension of not more than about 19.6 $N/mm^2$ (2 $kgf/mm^2$) and a bending strain of not more than about 0.2% on the superconductor, wherein each tape-shaped superconducting wire consists essentially of an oxide superconductor and a stabilizing metal covering the same, said plurality of tape-shaped superconducting wires forming a plurality of layers each being formed by laying said tape-shaped superconducting wires in a side-by-side manner, said plurality of layers being successively stacked on said core member without an insulating layer between the plurality of layers and the core member, said core member providing said superconducting cable with flexibility, said superconducting cable capable of maintaining a superconducting state at the temperature of liquid nitrogen, said wires having substantially homogeneous superconducting phases along the longitudinal direction of said wire, the c-axes of said superconducting phases being oriented substantially in parallel with the direction of thickness of said wire, said superconducting wires being formed by grains aligned in parallel extending along the longitudinal direction of said wire, said grains being stacked along the direction of thickness of said wire.

The superconducting cable advantageously has flexibility such that its superconductivity does not substantially deteriorate upon bending up to about 50 times the diameter of the cable. It is also advantageous that the core member be selected from the group consisting essentially of metals, plastics, reinforced plastics, polymers, and composites. Suitably, the superconducting cable provides a core member being a pipe having a spiral groove surface, a web shaped surface, a mat shaped surface, or a braid shaped surface on its exterior which forms a surface for the tape-shaped superconducting wires. The superconducting cable does not have any insulating layer between the plurality of layers of the tape-shaped superconducting wires. Advantageously the tape-shaped wires are laid on said core member with the tape-shaped plurality of layers being laid on the surfaces formed by said immediately prior layer of tape-shaped wires. Alternatively, the wires are twisted within said tape-shaped stabilizing metal covering. Advantageously in the superconducting cable said tape-shaped wires are laid at a lay angle of up to about 90 degrees, advantageously from about 10 to about 60 degrees, and preferably from about 20 to about 40 degrees. One embodiment of the present invention employs a superconducting cable having at least two distinct groups of tape-shaped wire layers. Advantageously the lay angle of each successive layer of tape-shaped wires alternate in lay direction or pitch; and each said successive layer consists of at least two tape-shaped wires. Advantageously, a layer of dielectric material separates each of the at least two distinct groups of tape-shaped wire layers. Preferably, a layer of dielectric material separates the core member from the layer of tape-shaped wires closest thereto. Advantageously, the dielectric material is selected from the group consisting of polypropylene, polyethylene, and polybutylene. In one embodiment the at least two distinct groups of tape-shaped wire layers carries approximately equal amounts of the current flowing through the cable. Also advantageous is where the group of tape-shaped wire layers furthest from the core member provides shielding of the current flowing through the other layers and reduces magnetic fields or eddy currents in the cable. Preferably, the stabilizing metal used is selected from the group consisting of silver, silver alloys, and nickel and nickel alloys, which may require a buffer layer. Included is an embodiment in which each tape-shaped multifilamentary oxide superconducting wire has such a structure that is a number of filaments consisting essentially of an oxide superconductor contained in a stabilizing material of silver, silver alloys, nickel and nickel alloys. The oxide superconductor may be prepared from an oxide superconductor such as bismuth, strontium, calcium and copper oxide.

Advantageously, each of said plurality of layers contains at least 2 tape-shaped silver contained wires per layer. Preferably, each of said plurality of layers contains at least 4 tape-shaped wires per layer. One embodiment includes an insulating layer between the second and third layer of said plurality of layers. Where there are more than 4 layers, advantageously, an insulating layer is present between each second and third layer of said plurality of layers.

In the conductor, the core member, which is generally called a former, is adapted to hold the tape-shaped superconducting wires at a bending strain of the prescribed range. This former has a length which is required for the superconducting cable conductor, and is provided at the center of the superconducting cable conductor. The former is in a substantially cylindrical or spiral shape so that the tape wires are laid thereon, and generally has a substantially constant diameter along its overall length. The former can consist essentially of at least one material selected from the group consisting of metals such as stainless steel, copper, aluminum and the like and plastics, reinforced plastics and ceramics.

Suitably, the former is preferably in the form of a tubular member having flexibility. It is also possible to employ a pipe having a spiral groove (hereinafter referred to as a spiral tube) as a former having sufficient strength and flexibility. A bellows tube having a bellows may also be employed as a former. Further, the former can also be prepared from a spirally wound material such as a spiral steel strip. Each of these shapes is adapted to provide the former with sufficient flexibility. The flexible former provides the conductor with flexibility. The flexible conductor can be taken up on a drum.

Suitably, it is possible to lay or wind several tape-shaped multifilamentary superconducting wires on the former. The tape wires may be laid in two or more layers while directing a surface thereof to the former. Each layer may be formed by an arbitrary number of the tape wires. When several tape wires are laid on the former in parallel with each other so that the surface of the former is filled up with the tape wires, additional tape wires are further wound thereon. When a sufficient number of tape wires are wound on the first layer of the tape wires as a second layer, a third layer of tape wires are then wound thereon. No insulating layer is provided between each adjacent pair of layers.

Suitably, each tape-shaped multifilamentary oxide superconducting wire is laid or wound on a former having a prescribed diameter at a bending strain or a curvature of a prescribed range and a pitch of a prescribed range. A relatively loose bending is applied to the tape wire along its longitudinal direction. The tape wire which is wound on the former is bent at a bending strain of not more than 0.4%, preferably not more than 0.3%. Superconductivity of the tape wire is not substantially reduced upon bending at a bending strain of such a range, as compared with that in a linear state.

It is preferable to adjust the pitch and the diameter of the former so that the bending strain of the superconductive wire is not more than 0.2%. Each tape-shaped multifilamentary oxide superconducting wire is preferably wound on the former with tension of not more than $19.6 N/mm^2$ ($2 kgf/mm^2$) in a range of 4.9 to 19.6 $N/mm^2$ ($0.5$ to $2 kgf/mm^2$).

The core member (former) can be formed by either an electric insulating material or an electric conductor. The electric insulating material is preferable in consideration of reduction in AC loss, while a metal which is a conductor is preferable in consideration of strength. A metal pipe having a spiral groove or a metal bellows tube may be used as the core member for providing the conductor with flexibility while maintaining constant strength. A metal core member can also be employed for safety in the case of an accidental abnormal current. In this case, it is possible to set optimum resistivity of the core member in consideration of AC loss of the conductor and the core member for the abnormal current.

When a metal pipe, which optionally may have a spiral groove, or a metal bellows tube is employed as the core member, the conductor can further comprise a metal tape which is laid or wound on the core member, and dielectric tape which is laid on a the outside surface of the metal tape. The metal tape can form a smooth surface for covering any grooves of the core member so that the superconducting tapes do not buckle. It is possible to cover any grooves while maintaining flexibility of the core member by laying the metal tape.

It is possible to employ tape-shaped multifilamentary wires each having twisted filaments. The filaments forming a superconducting multifilamentary tape are twisted at a prescribed pitch. Due to such twisting of the filaments, an induction current flowing between a stabilizing metal and the filaments is parted every twisting pitch into small loops, and hence the value of the current is limited. Thus, generation of Joule heat is suppressed in the stabilizing metal and AC loss is reduced as compared with a superconducting wire having untwisted filaments.

The superconducting cable conductor terminated by the method of the invention suitably has such flexibility that its superconductivity is substantially not deteriorated also when the same is bent up to 50 times the diameter of the cable. This conductor can be wound on a drum, to be stored and/or transported.

It is possible to provide a long oxide superconducting cable conductor having flexibility as well as excellent superconductivity. Suitably, an eddy current or a coupling current transferred between and flowing across the superconducting tapes is suppressed by the second or subsequent layer of tube-shaped superconductive wires which is provided according to one embodiment of the present invention. Suitably, there is provided a practical AC superconducting cable conductor.

Advantageously the superconductor material is a granulated ceramic inserted into a silver tube which is then drawn to about 1 to about 2 mm. A number, depending on the desired capacity of the final cable, of these small drawn tubes are then inserted into a silver tube which is drawn to the desired size for use. Optionally, such tube may first be cut into sections and then added to the second silver tube before drawing. This thin, silver, flat tape-shaped material is from about 80 to about 60 percent silver and about 20 to about 40 percent ceramic by weight, advantageously, about 65 percent silver and about 35 percent ceramic.

Also disclosed is a process or method which produces polymeric tapes suitable for use in a cryogenically operated superconducting power cable and the tapes so produced. The processing includes biaxially orienting either a polyethylene, polypropylene, or polybutylene film which has a maximum dielectric constant of about 3.0 and embossing said film with a random pattern. The combination of low dielectric constant, biaxially oriented, embossed film yields a polymeric material which overcomes the problems of brittleness, crazing, and excessive shrinkage which renders polymeric materials produced by known processes unusable in cryogenically operated power cable systems. In addition, the embossing of the film permits the relatively free flow of dielectric fluid within the cable.

The polyolefin sheet stock is biaxially oriented before use in the cable terminated by the method of the present invention. This involves stretching the sheet to a draw ratio of between about 5 to 1 and about 10 to 1 in the length direction and also orienting the sheet across their width.

The sheet, and tapes obtained therefrom which results from processing polyolefin stock to appropriate draw ratios has numerous qualities which make it superior for cable manufacture. To reduce the tape's tendency to fibrillate, to split over its entire length along a single tear, further processing is desirable. This processing involves a biaxial orientation in the direction across the sheet. This orients the sheet to a ratio of up to about 50% in the cross-sheet direction, and produces tape which is sufficiently biaxially oriented to satisfactorily limit the tendency to fibrillate.

The polyethylene, polypropylene and polybutylene tapes produced from the processing noted above are embossed with a particular pattern under specific conditions to assure proper cable impregnation and heat transfer. The embossing pattern consists of random or irregular channels, primarily directed in the cross machine direction. The tapes are cut from or otherwise obtained from the oriented sheet and may be used as single or multiple layer or laminate tapes.

At the same time the pattern, while it may permit some impregnant flow in both the machine and cross-tape direction, favors cross-tape flow and flow between butt gaps because such flow enhances impregnation from layer to layer and encourages heat transfer by convection. The cable itself is constructed of multiple layers of polyolefin tape, either polyethylene, polybutylene or polypropylene. To facilitate cable bending, different widths of polyolefin tape may be used in the layers. The sizes may progress to larger widths with increased distance from the conductor of the cable.

The polyethylene, polypropylene, or polybutylene film suitably has a dielectric constant no greater than about 3.0, with about 2.3 being the preferred maximum. The first processing step consists of biaxial orientation, or drawing, advantageously at a ratio of from about 5 :1 to about 6:1 in the machine direction and up to about 2:1 in the cross machine direction. Following orientation, the oriented tape is embossed at a temperature of from about 80°C to about 140°C, which produces on the tape a pattern consisting of irregular or random channels primarily directed in the cross machine direction.

Polymeric tapes which have not undergone the novel processing steps described above have several inherent problems which make them unusable in cryogenically operated superconducting power cable systems. For example, in a liquid nitrogen environment at 77K, most polymeric tapes become glass hard. This will lead to either tensile failure due to thermal contraction exceeding the inherent elongation or to simple disintegration of the tape. Another problem is crazing in liquid nitrogen. Liquid nitrogen, with a boiling point of 77K, is known to be a powerful crazing agent for polymers. Crazing usually leads to stress cracking and ultimately fracture of the tape. The biaxial orientation process described above overcomes these problems of brittleness, excessive shrinkage, and crazing.

Many polymers exhibit two distinct modes of yielding. One type of yielding involves an applied shear stress, although the yield phenomenon itself is influenced by the normal stress component acting on the yield plane. The second type of yielding involves yielding under the influence of the largest principal stress. This type of yielding is frequently referred to as crazing, or normal stress yielding. Crazing can be induced by stress or by combined stress and solvent action. It shows generally similar features in all polymers in which it has been observed. Crazing appears to the eye to be a fine, microscopic network of cracks almost always advancing in a direction at right angles to the maximum principal stress. Crazing generally originates on the surface at points of local stress concentration. In a static type of test, it appears that for crazing to occur the stress or strain must reach some critical value. However, crazing can occur at relatively low stress levels under long-time loading.

It is known from extensive electron microscopic examination of crazed areas that molecular chain orientation has occurred in the crazed regions and that oriented fibrils extend across the craze surfaces.

To aid in the construction of the cable the otherwise highly transparent polyolefin insulating tape advantageously is produced with coloring added. This technique adds significantly to the ability to make a useable cable, because the operator must properly index each subsequent spiral layer of tape with the immediate previous layer. When taping with the typical extremely clear and transparent polyethylene, polybutylene or polypropylene tape, the operator is unable to distinguish the butt gaps of the immediate previous layer from other butt gaps as far as eight or ten tape layers beneath. The addition of selected color dyes in specific quantities adds enough color to the tape to permit the operator to easily distinguish the edges, the butt gaps, of the immediate previous layer of tape from those of the earlier layers because the darkness of the color increases significantly with each layer. This coloring agent is selected so as to minimize any increase in dissipation factor of the original material.

The width of the tapes may vary; narrow near the conductor and wider at the outside. The direction of lay may also be reversed at a certain radial thickness, a factor which depends on the design of the taping machine.

The dielectric tapes may be wound in overlapping spiral layers so that each butt gap between spirals of the same layer is offset from the butt gap of the layer below. This construction is facilitated by the production of the insulating tape containing color.

Polyolefin tapes such as polyethylene, polybutylene and polypropylene, when highly oriented as suitably required , are transparent. This clarity becomes a disadvantage when the butt gaps of many layers show through to the surface of, the cable very clearly. The operator then has difficulty distinguishing the butt gap of the immediate previous layer, from which each new butt gap must be offset, from other butt gaps deeper within the cable.

The tape suitably therefore has a color component added to it so that the deeper a layer is within the cable, the darker it appears. Organic dyes may be used to produce this color because these organic compounds, unlike inorganic metal salts, have less detrimental effect on the loss tangent and permittivity of the tape.

Since a balance between the needed color and effects on the electrical characteristics must be struck, organic dyes are added in the proportions ranging between 100 to 1000 parts per million.

This results in a reduction in the light transmission of the tape to 10 to 50 percent of the original transmission. When the tape is used on a cable this reduces the visibility to one to four layers, whereas without color, butt gaps as deep as eight to ten layers within the insulation are, still visible.

Orientation is accomplished in the machine direction by stretching or tentering of the sheet to produce a thickness reduction ratio of between 5 to 1 and 10 to 1.

The thickness reduction ratio is in fact a measurement of the linear sheet orientation and is an indication of the changing tensile characteristics of the polymer. The process is advantageously performed at temperatures of between about 80°C and about 140°C.

The sheet is also processed to orient it in the cross-sheet direction to a reduction ratio of up to 50%. This is necessary because without such processing polymers tend to fibrillate, that is, to separate into individual fibers across their width and cause the tape to split lengthwise.

Polyolefin tapes resulting from the processing specified above, however, have a tensile modulus of at least 1723750kPa (250,000 psi) in the length (machine) direction, and meet all the criteria required for cable manufacture.

The tensile strength attained by the tapes through the processing is not only an indication of the resistance to deterioration, but also a necessity for the use on cable taping machines. Tapes processed as described above can therefore be used on conventional cable making machines with tensions great enough to construct a satisfactory tightly wound cable.

Before final construction into a cable, the polyolefin tape is embossed to furnish spacing between the tape layers which will facilitate relatively free flow of impregnants within the cable to enhance heat transfer.

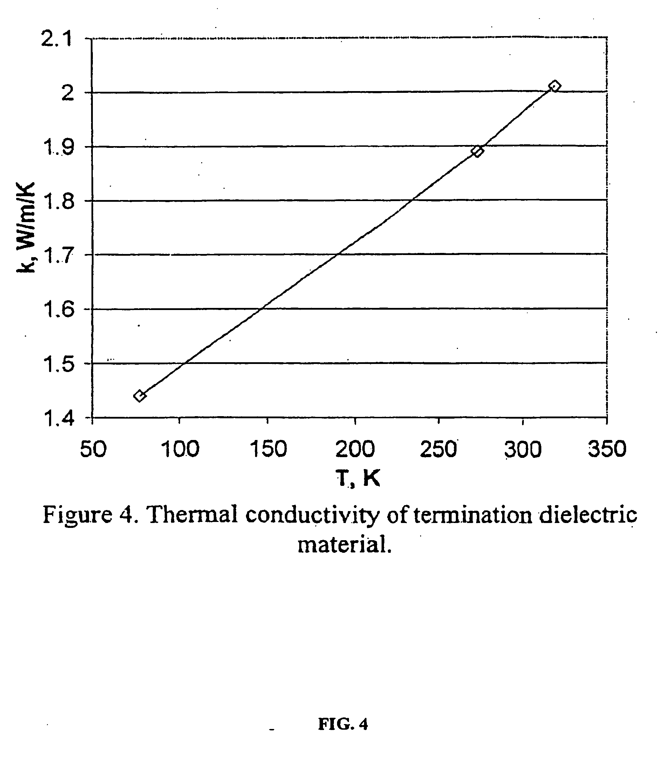

These goals are accomplished by a specific embossing technique. The tape is embossed advantageously by rollers. A typical pattern of embossing is shown in FIG. 4 which is a top view of a small section of tape 60 with valleys 61 in the pattern shown as dark lines.

The embossing pattern is characterized as irregular and preferentially permitting cross-tape flow of impregnant as opposed to flow along the length of the tape. The pattern of irregular valleys running essentially across the tape width as seen in FIG. 4 meets these criteria and, unlike a pattern of regular grooves or channels, it can not interlock adjacent tape layers. Non-uniform and irregular patterns therefore assure that the various tape layers can move small distances relative to each other and yield the degree of flexibility required to manufacture and install the cable.

The cross-flow favoring pattern provides heat transfer and impregnation capabilities for the cable. Although it is well understood that polymers are not permeable, the mechanism available for impregnation and heat transfer in the present cable does not depend upon the permeability of the material itself.

The embossed pattern is such that it can increase the effective tape thickness, that is, the peak to peak thickness may be twice the distance of the original tape thickness. The tape is then compressed during winding. Embossing is accomplished by rollers which cause a depression in one surface of the tape and a protrusion in the other surface. Once wound into a cable, these surface irregularities separate the tape layers; but since the pattern favors across-the-tape flow, impregnants need only flow, at the most, one-half the width of the tape to or from a butt gap where it can then progress to the next space between the tapes. This results in a relatively short path from the outside of the cable to the conductor.

Two typical patterns of embossing are: a coarse pattern with a typical 0.1mm mid-height width of the valleys and a typical 0.2mm spacing between adjacent peaks; and a fine pattern with typical 0.025mm mid-height valley widths and typical 0.05mm spacing between peaks.

The availability of embossing patterns ranging from coarse to fine allows the cable designer to strike a compromise between heat transfer and operating stress. The coarse pattern provides the best heat transfer with some reduction in operating voltage stress compared to the fine pattern and vice versa.

Also disclosed are cable and terminations and test procedures therefor. The cable test facility consists of a 5-m HTS cable between two terminations, and associated support systems such as ac and dc power supplies, cryogenic cooling skid and the data acquisition system. The facility cryogenic system uses a subcooler to provide up to 1 kW cooling for the cables and terminations. Boiling of the liquid nitrogen in the subcooler accommodates the total facility heat load. The shell side of the subcooler can be pumped by a vacuum pump to maintain the nitrogen bath temperature in the range of 70 to 77 K, although much of the test program was carried out with no subcooling, with the average cable temperature in the range 79-81 K. The system cycle is an open one where the exhaust from the shell side of the subcooler is ultimately vented to the atmosphere. The process cooling fluid (nitrogen at <10 bar) flows through the tube side of the subcooler and is routed to the cable supply manifold. Nitrogen leaving the cable/terminations flows to the inlet of the LN circulation pump, which provides the pressure head for the closed loop flow of the pressurized nitrogen.

Electrical and cryogenic data are taken by dedicated sensors scanned by three ten-channel multimeters connected to a personal computer (PC)-based, data acquisition system using the LabVIEW program. These diagnostics allow measurement of the dc V-I characteristics and the ac losses of the cable, dielectric integrity via a partial discharge measurement, and cryogenic performance at rated voltage (7.2 kV ac rms) and current (1250 A). A high-voltage power supply is available (rated at 1 A at 18 kV) to test the cable at a peak voltage level of 2.5 times the operating voltage. The dedicated impulse power supply was upgraded from 100 kV to 200 kV and a 25 kA pulsed power supply installed to simulate cable overcurrents due to system faults.

Two termination concepts have been developed. The majority of the cable test program was carried out with a vacuum termination concept that uses the vacuum for both electrical and thermal insulation. Each vacuum termination had two sets of feed-throughs, one set for the phase conductor and the other set for the HTS neutral conductor. Each set had a warm ceramic bushing making the transition from ambient (295 K, 1 atm) to vacuum (295 K) and the second ceramic bushing making the transition from vacuum to (~72-81 K) liquid nitrogen at < 1 MPa (10 bar). These bushings are rated for full cable current and voltage. The two terminations are pumped through a common vacuum header by a mechanical/turbomolecular pumping station; typical vacuum is in the $10^{-5}$ to $10^{-4}$ torr range, which provides sufficient thermal insulation when combined with multi-layer superinsulation. There were concerns about the reliability during cooldowns and in service for long time periods. A slight leak in either cold bushing due to thermal or electro-mechanical stresses would degrade the vacuum in the termination. Only a small amount of liquid nitrogen leakage is required to put the vacuum at the Paschen minimum for nitrogen gas, which breaks down at - 250 V, a much lower level than the operating voltage. Therefore, an alternate termination embodiment was developed that operates with pressurized liquid and gaseous nitrogen.

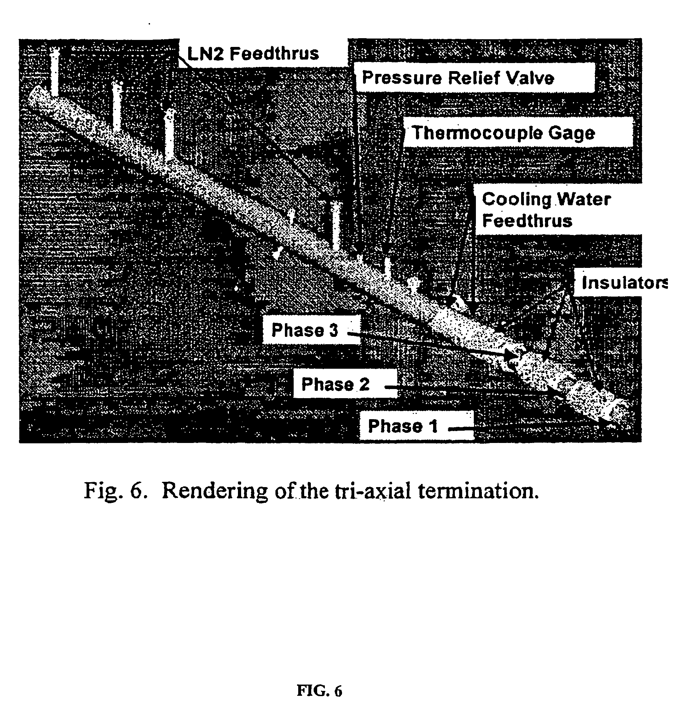

Like it's vacuum predecessor, it is designed for 18 kV ac withstand and 110 kV BIL. It is, however, more compact than the vacuum termination as shown in Fig. 6. The basic concept is: there are no cold phase or shield bushings. Each termination has two conventional warm bushings with no significant thermal stresses. Between these warm bushings and the ends of the HTS cable is a concentric arrangement of copper pipes designed to minimize the axial heat conduction at the operating cable current. Non-metallic cylinders are used for electrical insulation between the phase and neutral copper pipes. The dynamic vacuum system is eliminated and what remains is a normal static vacuum system with multi-layer superinsulation to reduce the radial heat loss. The entire termination is at the cryogenic system pressure and there is a natural thermal transition from liquid to gas along the copper conductor pipes. If there is a leak the internal pressure slowly reduces to atmospheric nitrogen pressure (which can withstand 30 kV/cm) and the system is designed to avoid breakdown in such an event. This termination design is more operationally efficient in that vacuum leak testing and pumpdown are eliminated.

In an extended test program in pressurized termination successfully completed the following tests:

- extended operation at design current (1250 A ac rms) and voltage (7.2 kV phase-to-ground)
- ac withstand test to 18 kV for 30 minutes with no breakdown
- impulse testing to 90 kV (see discussion below on cable testing)
- measurement of termination heat loads

The heat loads were gradually reduced through a series of design improvements with the best performance on the 30-m cable terminations.

Six of these pressurized terminations in the 3-phase, 30-m HTS cable were tested. The heat load on the pressurized terminations installed on the 30-m cable with an ac current of 600 A is about 230 W per termination. Each termination has two conduction-cooled copper leads (pipes) with a theoretical minimum heat load of 44 W/kA each.

The single-phase, 5-m cables tested had inner cable conductor consisting of four layers of helically wound, Bi-2223/Ag tapes. Four layers were chosen to provide enough capability for the design current of 1250 A. The tapes were machine wound at a 30° angle on a stainless steel former with an outer diameter of 38 mm. Cryoflex™ dielectric tape was wrapped between the inner and outer HTS conductors. The outer HTS cable conductor is similar to the inner conductor and provides shielding of the currents flowing on the inner conductor and thus eliminates magnetic fields or eddy currents in the external structure. The outer HTS cable conductor is at ground potential.

The 5-m cable test results included a successful overcurrent test up to 12.8 kA for a 2-s pulse length. This is over ten times the design current and simulates a short circuit on the load side.

The cable was also tested for basic impulse loading (BIL) to simulate surges such as lightning strikes. The requirement for 15 kV class distribution cables is 110 kV BIL, with the pulse rising to this maximum in 1.2 $\mu$s. The HTS cables and terminations withstood a BIL up to about 90 kV and would breakdown above that value. When the test voltage was lowered to below 90 kV, the system again withstood the test pulse.

A 5-m cable was removed from the test facility and bent in a wooden fixture of the same diameter (2.44 m) as a cable shipping spool. It was bent in one direction and the reverse direction over four cycles. Cable testing before and after bending indicated no damage to the dielectric system as ac withstand and impulse loading were unchanged from previous tests. The cable critical current was reduced by about 15 % after bending.

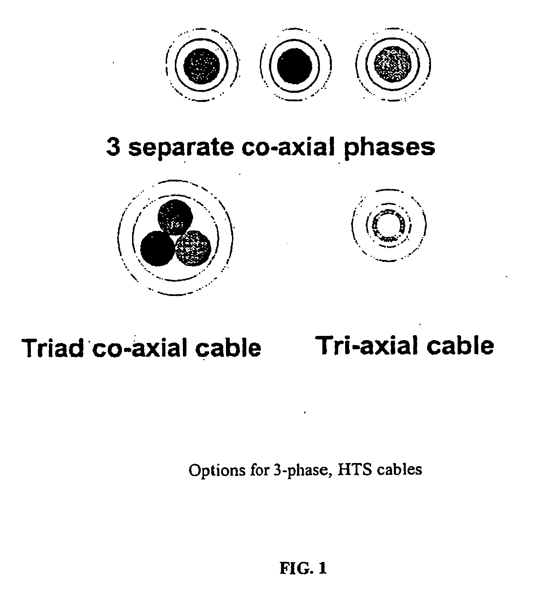

A cold dielectric, tri-axial cable was also developed and tested. A ~1.5 m long cable was fabricated. This configuration is more compact than three separate single-phase cables and the amount of HTS tape is reduced significantly as a balanced load would produce no net induced current outside the three concentric phase layers. The cable cross-section is shown in Fig. 1, indicating the relative size of a single phase and a tri-axial cable. The liquid nitrogen flow cross-sectional areas are about the same but the dielectric is somewhat thicker for the tri-axial cable due to the higher phase-to-phase voltage between the HTS conductors relative to the phase-to-ground voltage in a co-axial single-phase cable.

Superconducting cable for ac yields potential low-loss transmission capability. There are known superconducting cables for this application, but the construction is complex, so the manufacture of the cables is very expensive. The phase conductors are manufactured of metallic superconducting material. This necessitates separate cooling for each phase. The space within the phase conductors is thus used as a channel for the cooling material whereby closed-loop liquid nitrogen or helium is used for the cooling system.

One embodiment relates to terminating a superconducting cable that is more compact, requires less material, and whose cooling mechanism is smaller than known superconducting cables.

Suitably, the superconducting cable is constructed so that only a single neutral conductor is required for the three phase conductors. Additionally, the phase conductors, the neutral conductor, and the cooling channels are concentrically arranged around one another resulting in a very compact construction. The cooling of the cable takes place with liquid nitrogen. An electrical insulation manufactured of polyethylene or polypropylene is placed between the phase conductors as well as the neutral conductor. The cable restricts outward temperature loss through vacuum and/or insulation. The coolant circulates out in the core of the cable and back in an annular channel that is directly connected to the vacuum/insulation.

Figure 1 illustrates a triaxial superconducting cable in cross-section. The core of the cable is formed around a channel with a diameter of from about 50 to about 200 mm through which the coolant is conducted. Other diameters can likewise be selected. The channel defines the boundary of the first phase conductor. The sheath of the channel is manufactured of a superconducting material. Preferably the phase conductor is manufactured of superconducting tapes. The superconducting tapes are sleeves of silver filled with a high temperature superconductor ceramic material. Subsequently the sleeves are rolled into surfaced tapes. These tapes are then wrapped on a mandrel whereupon the conductor is built. The thickness of the conductor preferably is from about 0.1 to about 10 mm. An electrical insulation is placed on the first phase conductor. This is advantageously made of polyethylene or polypropylene. The phase conductor tapes are wound with these materials until the insulation reached the desired thickness. The thickness of the insulation is preferably from about 10 to about 50 mm. The second phase conductor is applied over the insulation. This is again manufactured with tapes of superconducting material which are in turn wound about the insulation. The second phase conductor achieves the same capacity as the first phase conductor. Applied to the second phase conductor is a subsequent insulation. This is manufactured in the same manner and capacity as the prior insulation. The third phase conductor, which is manufactured in the same manner and capacity as the other phase conductors is applied over the insulation. A further insulation that is manufactured in the same manner as the prior insulations is applied over the phase conductor. Optionally the thickness of the final insulation may be less than the thickness of the prior insulations. The boundary of the neutral conductor is outwards of the final insulation. This neutral conductor has, under symmetric load, only a small current to carry, and can therefore be manufactured of customary conducting material, preferably copper.

The thickness may only be a few mm. The return conductor serves simultaneously as a border for the closed-ring cooling channel through which the circulating liquid nitrogen is conducted. The diameter of the cooling channel preferably is from about 150 to about 500 mm. A vacuum or superinsulation is outwards of the cooling channel. This defines an inner boundary surface and an outer boundary surface. Between both boundary surfaces an annular space is formed, which is evacuated or filled with a super insulation.

The cable was cooled down to about 81 K with liquid nitrogen at about 4.7-atm pressure and a flow rate of about 0.19 $l$/s (3 gpm). Short current pulses much larger than the critical current, $I_c$ (about 910 A) of the cable were applied to the cable to simulate fault currents in case of an in-service short circuit. The voltages across the phase conductor and the joint, the current and voltage of the shield conductor, and the temperature and pressure of the coolant during the pulse and for a period after the pulse were monitored. Shots were made first with a 1-s pulse at increasingly higher current from 4.8 to 12.8 kA. The pulse length was then increased to 2 s and again up to 12.8kA current pulses were applied. The pulse length was shortened to 0.5 s and a current of 15.3 kA was applied. Finally, the pulse length was lengthened to 5 s and a current of 6.8kA was applied.

A fault-current pulse of about 12.8 kA was programmed to apply to the cable for 2 s. As soon as the current reached 12.8 kA, a voltage (V-cable) of about 3.2 V was developed across the cable. This and the voltage drops along the terminations and external power supply cables had apparently exceeded the power supply limit (12 V) and caused the current to drop. By the end of the 2-s pulse, the current was lowered to about 6.9 kA. However, the cable voltage continued to rise to over 5 V, indicating heating in the conductor. On the other hand, the cable-to-connector joint voltage (V-joint) was lowered from about 0.3 to 0.17 V - in the same proportion as the current drop.

The cable voltage rise indicated a temperature rise had occurred. The measured voltage was divided by the corresponding current to get the resistance response of the cable. At the beginning of the 12.8kA pulse, the cable resistance went to 0.25 mΩ (as compared to 0.54 μΩ at critical current) and increased to 0.72 mΩ by the end of the 2s pulse. (The discontinuity at the beginning and end of the current pulse was due to dividing the cable voltages by the near zero currents.) Based on the silver resistivity change as a function of temperature, the above resistance change of the cable indicated that the HTS conductor had heated to about 170 K by the end of the pulse. Although the cable voltage nearly disappeared after the current pulse, its resistance showed a relatively slow cool down to about 0.1 mΩ seven seconds later.

In the construction of the cable, the HTS tapes are separated from the coolant on the ID with bedding tapes and a corrugated stainless tube and on the OD with layers of Cryoflex dielectric tapes. Thus, cooling of the HTS tapes is essentially by conduction only. The heating of the HTS tapes during the fault-current pulses can be approximated as adiabatic. Integrating the product of current and voltage (the power) over the pulse, the total energy generated in the conductor in this shot was found to be about 80 kJ. Using the silver specific heat integral, it was estimated the conductor would heat up to about 175 K adiabatically. The joint resistance remained at 24 μΩ throughout the shot. There was no noticeable temperature rise on the joint because of its better cooling condition (with direct contact with $LN_2$).

The fact that in response to an over-current, the cable resistance becomes much higher than its value at $I_c$ means that the HTS cable possesses an intrinsic current limitation function. Determining the extent of the cable resistance rise during an over-current indicates the extent of the current limitation offered by the cable. From the moments the different pulsed currents reached their peaks, the cable resistance at all 15 over-current shots was determined. The 5-m cable resistance increased rapidly from 0.54 μΩ at $I_c$ to 0.31 mΩ at 15.3 kA - nearly 600 times higher.

Above $I_c$ the voltage of the present superconductor increases in proportion to I to the $3.8^{th}$ power (the *n*-value). Thus, the resistance of the superconductor at an over-current, I can be scaled from its value of 0.54 μΩ at $I_c$ by a factor of $(I/I_c)^{2.8}$. In addition to the superconductor, the present HTS tape contains 70% of silver in the composite. Using a resistivity of 0.3 μΩ-cm, the resistance of the silver matrix in the cable is estimated to be about 0.25 mΩ at liquid nitrogen temperature. The cable resistance in the over-current regime was then calculated by paralleling the scaled HTS resistance with the silver resistance. The measured data follows the calculated curve very well - proving the power-law scaling of the HTS resistance above $I_c$ is appropriate.

This indicates that the HTS in the present cable shared the fault current equally with the silver matrix at 8.1 kA - about 9 times the critical current. Below this value the current flows mostly in the superconductor, above this value more and more current flows in the silver matrix. At 15 kA, the HTS can carry only 15 % of the fault current. Above 10 kA the measured data lays above the calculated curve, indicating tape heating before the fault current reached its peak value.

Because of the high voltage drop developed across the cable during a fault over-current, the power is high and the total energy dissipation can be significant when the pulse length is long. When this energy is dumped into the coolant, the temperature and the resulting pressure rise may upset the cooling system.

The total energy produced in the cable in this shot was about 80 kJ. If half of this energy were dumped instantaneously into the liquid nitrogen in the inner pipe (the former) of the cable the temperature would rise by about 5 K. No such temperature rise was observed. The phase conductor was not cooled directly by the coolant, and it took tens of seconds for the conductor to cool (and thus to release heat to the coolant). The liquid nitrogen flow rate of about 0.2 m/s inside the pipe replenished the coolant fast enough to prevent any measurable temperature rise in the coolant.

Contrary to the temperature response, both the inlet and outlet pressure start to rise 1 s into the pulse and reached a peak value of about 34.5 kPa (5 psi) at 1 s after the pulse. Both pressure taps were meters away from coolant inlet and outlet of the cable. The pressure wave reached them in a fraction of a second (with the speed of sound in liquid nitrogen). Since no temperature rise in the coolant was observed, the pressure rises resulted from transient heating in the terminations.

Over the one-hour span of the 15 simulated fault-current shots, the accumulated temperature rise of the cable outlet coolant was about 1 K, and there were no significant system pressure changes. Repeated fault-currents that are separated minutes apart would not upset the present HTS cable nor the cryogenic system.

The voltage and current induced in the shield loop by the fault current in the phase conductor are another concern. In the experiment, the two ends of the superconducting shield were tied together with copper cable and a current shunt to monitor the induced current. The induced current in the shield loop for the 12.8kA, 2s fault-current shot. Only about 350 A and 120 A of transient currents were induced in the shield at the rise and fall of the phase conductor over-current. Part of the reason for these low values is due to the relatively long rise and fall time (of about 300 ms) of the over-current provided by the present power supply. If a fault current would rise faster, the induced transient in the shield would be higher. During the 2 s of slow decrease of over-current, there was no measurable induced current in the shield.

The maximum voltage developed over the shield conductor was less than 0.35 mV. Since this voltage is lower than the critical-current voltage of 0.5 mV for this cable and the induced transient current was lower than the critical current, therefore the shield conductor stayed superconducting during the fault-current pulses.

To determine if there was any significant degradation of the cable from the simulated fault current shots, the dc V-I curve of the cable was measured after the present fault current tests. The present V-I curve of the cable was compared to a measurement made a year earlier. There was no difference in the two V-I curves. Between these two dc V-I measurements, the cable was subjected to high-voltage withstand tests to 18 kV, impulse tests to 90 kV, long duration (72 hr) testing at the design current and voltage, and tens of cool-down and warm-up cycles. The cable showed no degradation in its dc characteristics throughout these tests. At the criterion of 1 $\mu$V/cm, the critical current of the cable remained at about 910 A.

HTS cables are being proposed for retrofitting existing underground cables. In common underground cable installations, the three separate phases are installed in separate ducts. It is assumed there is a refrigeration unit supplying subcooled liquid nitrogen, at only one end of the cable. Suitably, the HTS cable configuration has a single cryostat counterflow cooling arrangement for the HTS cable. The HTS cable former.and cryostat walls are typically taken to be flexible, corrugated stainless steel tubing. The HTS cable is a cold dielectric configuration and requires a superconducting shield layer, separated by a dielectric material from the main conductor. The shield carries the same current as the main conductor.

In the counterflow cooling arrangement the liquid nitrogen flows through the HTS cable former providing cooling to the terminations as well as the cable and returns in the annulus between the outside of the cable and the inner cryostat wall. In the parallel flow arrangement, liquid nitrogen flows in the same direction through the cable former and the annulus. The liquid nitrogen is returned either through a separate vacuum jacketed duct. The single cryostat for the return flow is taken to be the same as the cable cryostat. The dimensions used in this study for these two cases are given in Table 1.

TABLE 1

| Cryostat Dimensions | | |
|---|---|---|
| Nominal Dimension | Counterflow | Parallel Flow |
| Former diameter (mm) | 38 | 38 |
| Cable diameter (mm) | 65 | 65 |
| Cryostat inner diameter (mm) | 75 | 75 |
| Cryostat outer diameter (mm) | 125 | 125 |
| Return cryostat inner diameter (mm) | - | 75 |
| Return cryostat outer diameter (mm) | - | 125 |

It is assumed that two phase flow of liquid nitrogen is not permitted in the HTS cable power transmission system. First, two phase flow pressure drops are higher than for single phase flow. In addition, gas bubbles in the dielectric could decrease the cable electrical insulation levels.

The ac loss and thermal analysis of HTS power transmission cable systems is accomplished by performing an energy balance of the cable system. For the HTS cable, the one-dimensional energy balance equation can be written as:

$$\rho c \frac{\partial T_{HTS}}{\partial \tau} = \frac{\partial}{\partial x}\left(kA_{HTS}\frac{\partial T_{HTS}}{\partial x}\right) + Q'_{AC} - \sum_{i} Q'_{conv,i} \tag{1}$$

where $\rho$ is the density, $C$ is the heat capacity, $z$ is the coordinate direction along the cable axis, k is the thermal conductivity, and $A$ is the cable cross-sectional area.

The HTS cable energy balance includes a convection heat transfer terms $Q'_{conv,i}$ include convection to the liquid nitrogen flow in the former and also in the annular region between the cable and the cryostat inner pipe. The product of the thermal conductivity and the cross sectional area of the cable, $kA_{HTS}$, are constant for this work and is equal to 0.16 Watt-meter per Kelvin. Additional energy balance equations are needed for the liquid streams and are given by:

$$\rho_{vi} c_{p,vi} \frac{\partial T_{vi}}{\partial \tau} = \dot{m}\frac{\partial h_{vi}}{\partial x} + \sum_{i} Q'_{conv,i} \tag{2}$$

where $i$ represents each liquid nitrogen stream (former flow, annulus flow, and return flow as applicable). The convection heat transfer to the inner flow is solely with the inside of the HTS cable former. The outer nitrogen flow exchanges heat convectively with the outside of the HTS cable and with the inside of the double walled flexible cryostat.

The convective heat transfer coefficients are calculated using:

$$N_{Nu} = \frac{C_h d_{hyd}}{k_{LN2}} = 0.023 N_{Re}^{0.8} N_{Pr}^{0.3} \tag{3}$$

where $N_{Nu}$ is the nusselt number, $C_h$ is the heat transfer coefficient, $k_{LN2}$ is the thermal conductivity of the liquid nitrogen, $N_{Re}$ is the Reynolds number, and $N_{Pr}$ is the Prandtl number.

The equations are cast into a finite difference form and numerically integrated in time until a steady state is reached. After the determination of the temperature profiles, the pressure drop can be approximated by integrating the following equation over the flow path length:

$$dP = \rho V dV + f\frac{\rho V^2}{2}\frac{dx}{D} \tag{4}$$

where $V$ is the liquid velocity and $f$ is the friction factor.

In a rigorous treatment, the thermal-hydraulic solutions should be coupled, but it is assumed that compressibility effects and density variations are small for liquid nitrogen under the conditions considered in this work. Therefore the temperature and pressure profile solutions were performed separately. The friction factor for cryogenic liquid flow in corrugated bellows has been suggested to be four times that for a smooth pipe. In the cases presented here, the Reynolds numbers are in the range of $10^5$ to $10^6$, and a constant friction factor $f=0.07$ was used. The pressure drop across the terminations is assumed to be small and is neglected.

The HTS cable cryostat is taken to be a flexible double wall construction with the dimensions listed in Table 5. The sink temperature, $T_\infty = 300$ K. Typical commercially available vacuum insulated flexible cryostats have an effective, on actual field installation thermal conductivity, $k_{ef}=0.0008$ Watts per meter per Kelvin. The local heat transfer per unit length can be calculated and depends on the local liquid nitrogen temperature $T_{vi}(x)$, and the cryostat inner and outer tube diameters $D_{ci}$ and $D_{co}$. The temperature difference driving this heat transfer term is typically over 220 K for the outer cryostat.

$$Q'_{cstat,i} = \frac{2\pi k_{eff}(T_\infty - T_{v,i}(x))}{\ln(D_{co}/D_{ci})} \qquad (5)$$

The critical current was scaled from earlier measurements on the 5-meter system. Using the measured linear fit in temperature, the critical current can be scaled with temperature using a reference value of 3000 A at 77K by the following:

$$I_c(T) = 6188.2 - 41.405T \qquad (6)$$

The ac loss, $P_{AC}$ in watts per meter, is computed using the monoblock model.

$$P_{AC} = \frac{\mu_0 f I_c^2}{2\pi h^2}\{(2 - Fh)Fh + 2(1 - Fh)\ln(1 - Fh)\} \qquad (7)$$

where $F=I_p/I_c$, the ratio between the peak current in the ac cycle and the critical current of the superconductor, $f$ is the frequency, and $h=(D_o^2-D_i^2)/D_o^2$. This study will show results for operating currents of 1500 $A_{rms}$ and 2000 $A_{rms}$.

The dielectric loss depends on the design voltage of the cable. A nominal value of 0.05 Watts per meter was assumed and is consistent with earlier work.

The model was compared to measurements on a 5-meter HTS cable system. In this case, the 5-meter HTS cable was cooled with a flow of 210 grams per second of liquid nitrogen supplied at a temperature and pressure of 79.2 K and 540 kPa (5.4 bar). The applied current to the cable was 1250 $A_{rms}$. The measurements qualitatively agree with the calculation. The discrepancies in temperatures are primarily due to the use of a simplified thermal model for the terminations, which for short cables, is the dominant system heat load. The terminations had vacuum thermal and electrical insulation. Each termination contained two optimized current leads to carry in excess of the rated current of 1250 $A_{rms}$. The termination heat load is about 300 Watts for each end. While there is some variation in the termination heat load due to the level of operating current, the difference is considered to be small, particularly for long cables, and is neglected.

For a HTS power transmission system, the termination heat loads are constant, and independent of the length of the transmission cable system . The ac loss and thermal load through the cryostat depend on the length of the HTS transmission cable system, the cooling flow configuration, the supply temperature and flow rate.
Constant liquid nitrogen conditions, a pressure of 1 MPa (10 bar) and a temperature of 67 K, were used. The properties of liquid nitrogen were obtained using GASPAK. This pressure is well within the capabilities of commercially available flexible cryostats, and the temperature is typical for a subcooler refrigeration unit. The triple point of nitrogen is about 63.2 K, so lower temperatures, say 65 K, could be achieved using closed cycle refrigeration systems.

Many crucial factors in a HTS power transmission cable system depend on the cooling flowrate. A 250 meter counterflow case and a 1000 meter parallel flow case were analyzed to determine the maximum cable temperatures and pressure drops at a current of 2000 $A_{rms}$ at different flowrates.

In both arrangements, higher temperatures are reached in the cable at lower flow rates. In the counterflow case, the system temperature, at which the liquid nitrogen is returned to the refrigerator, is at a lower temperature than the cable maximum. The opposite is true for the parallel flow cooling arrangement. For low flows, the counterflow cooled cable maximum temperatures are high enough to significantly reduce the superconducting properties of the cable. Increasing the flow reduces the maximum temperature at the expense of higher pressure drop. This is not the case for these flowrates in parallel flow even at a length of 2000 meters.

One HTS cable configuration has a single cryostat, counterflow-cooling arrangement, flexible former, and corrugated stainless steel tube. The HTS cable is a cold dielectric configuration and requires a superconducting shield layer, separated by a dielectric material from the main conductor. The shield is designed to carry the same current as the main conductor.

The features of the coaxial design are 1) image current in shield layer reduced external magnetic field and eddy currents in cryostat and ducts, 2) both the HTS conductor and dielectric are wrapped from tapes, 3) cryogenic dielectric reduces size and increases current-carrying capacity and 4) flexible cable to allow reeling.

30-m HTS cables were made using specially designed machinery to wrap the superconducting tapes onto the former. After the first two cables were wound including main conductor, cryogenic dielectric and shield, they were installed in their cryostats. Special end caps were fabricated for the cryostats to allow cooling of the cables with liquid nitrogen at atmospheric pressure. Temporary voltage taps were installed on the ends of the main and shield conductors to allow measuring the critical current of just the superconductor. The dc V-I curve of the main conductor for phase 2 of the 30-m HTS cable has a critical current, $I_c$, of 2980 A and an n-value of 9 based upon the 1 $\mu$V/cm criteria. The critical current of the phase 1 main conductor was more than 3000 A (the limit of the power supply). The critical current of one of the 5-m cables was 1090 A with an n- value of 3. The design current of the 5-m and 30-m cables was 1250 A and the same number of layers and superconducting tapes were used in both the 5-m and 30-m cables. In the time that elapsed between procurement of the superconducting tapes for the 5-m and the 30-m cables, the tape performance improved dramatically. As a result, the 30-m cables while designed for a 1250 A rating, were actually ~3000 A conductors. With this extra margin, the superconductors contribute no resistance when operating at currents below about 1500 A. At 2500 A, the voltage drop is 0.25 $\mu$V/cm and the dc resistance is 0.01 $\mu\Omega$/m. After measuring the critical currents, the temporary voltage taps were removed.

The HTS cable site is part of the electric system delivering power to three manufacturing plants. A switching substation was constructed for the project, which allows either, or both the superconducting cable and the overhead line to serve the load. A control building houses the electrical control and protection panel for the superconducting cable, the cryogenic control system, and a conference room.

There are two 115-kV transmission lines providing service, to the general transmission substation. The transmission substation has a total capacity of 40 MVA with two 20 MVA matched, non-regulating, step-down transformers, 115 kV high side and 12.4 kV low side.

There are two 12.4 kV distribution feeders exiting the substation. Both feeders use 1033.5 ACSR (aluminum conductor steel reinforced) which is a typical type of conductor. The 12.4 kV protection system is a vacuum breaker with a reclosing relay set for three reclosures before lock-out. The symmetrical, 3-phase fault current is around 14,000 A at 12.4-kV. The 5-m superconducting cable has been successfully tested at fault currents above this level.

The HTS cable is cooled by circulating subcooled liquid nitrogen through the three cable phases. Based upon the 5-m cable testing program, the requirements for the 30-m cable cryogenic system were determined to be 3000 W heat load, 70-80 K operating temperature range, 1.3 Us (21 gpm) flow rate and a maximum operating pressure of 10 bar. Two cryogenic refrigeration system designs were reviewed as options - an open-loop boiling bath subcooler and a closed-cycle refrigerator. The open-loop system was selected because of the lower capital equipment costs. The operating costs of both approaches are comparable due to the higher efficiency obtained with large scale liquid nitrogen production plants over the smaller refrigeration unit that would have been used for the 30-m HTS cable system. For a cable system with a much longer operational lifetime, a closed-loop refrigerator system, that included an open-loop nitrogen back-up system which would be used during maintenance on the main system, would be a better choice because it would not require frequent refilling of a bulk storage dewar.

The cryogenic system design consists of three main components - a liquid nitrogen storage tank, a cryogenic skid, and vacuum-jacketed piping.

The cryogenic skid contains a cold box which houses a subcooler, a phase separator, and two buffer volumes, under a common insulating vacuum. The cold box components and associated piping are all wrapped with multi-layer thermal insulation to minimize the background thermal load. The cryogenic skid also contains three vacuum pumps used to lower the pressure on the subcooler bath and lower the operating temperature of the system. There are main and backup liquid nitrogen circulation pumps. The flow of liquid nitrogen follows a path through the system from the circulation pump, through the subcooler, through the supply line to the cable, and returns via the return line to the phase separator at the inlet of the pump. The phase separator is used during system start-up to prevent vapor from reaching the circulation pump. The subcooler is filled from the bulk storage tank. The subcooler boil off is vented to the atmosphere through the vacuum pumps, when operating below 80 K. The buffer tanks alternate in use, one is providing system pressurization while the other is filled and waiting.

The liquid nitrogen storage tank has a 40,000 liter capacity. The tank was mounted horizontally on concrete footings for a low profile. The tank level is monitored remotely using a telephone line and is filled by the liquid nitrogen supplier as needed.

Vacuum-jacketed piping connects the skid to the cable. The are three pipes - inlet, return and cooldown, connecting each of the three phases of the cable. With this arrangement, any combination of the three phases of the cable can be either in service, out of service or in a cooldown sequence.

A programmable logic controller system is used to operate the cryogenic system during normal operation. System cool down and restart are done manually due to the infrequent number of times these operations are performed, and the expense of programming.

The first off-line test to be performed placed voltage on the cable using a variable ac voltage power supply.

Using the power supply, voltage was applied one phase at a time to 11-12 kV and held for 30 minutes to test the cable dielectric system. Phases 1 and 2 were maintained at 166% of rated voltage without breakdown. Phase 3, which has a slightly different geometry, was maintained at 230% of rated voltage without breakdown.

During the test, the charging current was measured from which the cable capacitance was determined and compared to the calculated capacitance as shown in Table 2. The calculated cable inductance is also shown. The cable surge impedance is 4 Ω which is lower than a conventional copper cable. With this lower surge impedance, the ac superconducting cable has a longer critical length (length at which charging current equals rated current) when compared to a conventional copper cable. Thus the superconducting cable can be run in longer continuous lengths before the charging current dominates the cable's current carrying capability.

TABLE 2

MEASURED AND CALCULATED CAPACITANCE

| | Phase 1 | Phase 2 | Phase 3 |
|---|---|---|---|
| Capacitance - nf/m | | | |
| Measured | 1.815 | 1.739 | 1.265 |
| Calculated | 1.778 | 1.778 | 1.207 |
| Difference | 2.1% | -2.2% | 4.8% |
| Inductance-nH/m | | | |
| Calculated | 31.4 | 31.4 | 38.2 |
| The above values result in a surge impedance for the 30-m cable of about 4 ohms. | | | |

To measure the dc voltage vs. current relationship (V-I curve) of the cable, a 3000 A dc power supply was provided. Voltage taps were temporarily installed external to the main and shield bushings. The V-I curve was measured two phases at a time by connecting the dc power supply on two phases at one end and a short jumper between the phases at the other end. Phase 2 and 3 were measured, then phase 1 and 2, so phase 2 was measured twice. The V-I curves of the main conductors were measured, and then the shield conductor, as the cable is the cold dielectric design with coaxial conductors. The dc critical currents were as expected based on HTS tape performance and cable design. The V-I curve for phases 2 and 3 show the linear behavior over most of the current range is due to the position of the external voltage taps that includes extensive copper buswork and connectors beyond each end of the superconducting cable.

The dc voltage/current tests were repeated to determine cable performance after 6 months of operation after 4 to 6 cool-down and warm-up cycles, and operating under variable loading conditions. There has been no change in the superconducting cable performance.

DC load current tests were conducted to simulate average, rated, and emergency loading on the superconducting cables. The extended load current tests were run at -800, 1200 and 1400 A each for 8 hours on the two of the main conductors at a time using the dc power supply. No changes in cable cooling system temperatures were observed during these initial loading tests.

The next test was an extended, open-circuit, rated-voltage test using the substation supply. The cable breaker at one end was closed and the other end remained opened, so no current was flowing through the cable. Phase voltage was maintained on each phase in several sequences up to 12 hours. The cable dielectric performance was as designed.

The liquid nitrogen return leg temperature variation for phase 1 in the cable temperature is about 1 K.

The return leg liquid nitrogen pressure for phase 1 in the cable pressure is about 7.6 kPa (4 psi).

Several cryogenic heat loads tests have been conducted and the total cable system heat loss has been measured. The heat loss for all 3 phases of the 30-m cable and terminations at 600 A was found to be 1490 W. The various components have been measured directly or separately, so a breakdown of the heat loss can be estimated. For each cable termination, the heat loss is 230 W and there are six terminations. The cable cryostats, each a 7.62 cm × 12.7 cm (3" × 5") vacuum jacketed pipe, are 1 W/m/phase. At 600 A, the conductor and shield accounted for 0.2 W/m/phase. A triaxial, cold-dielectric HTS cable is the most compact cable possible as it places the 3 electrical phases about a concentric center which is not possible in a copper cable or a warm-dielectric HTS cable. The cryogenic dielectric material in the form of tapes impregnated with liquid nitrogen is in between the superconducting phases and between the outer superconducting phase and the metal shield.

One embodiment of the present invention is a termination method providing for ambient temperature connections to the three phases and the shield. It makes the temperature transition from liquid nitrogen temperature to ambient temperature in the three copper-pipe phase conductors as well as the copper braid shield conductor.

There are several configurational options for three-phase, cold-dielectric, superconducting power cables as shown in FIG. 1.

Three separate co-axial phases is the configuration used in the 30-m HTS cable demonstration. This co-axial arrangement is fairly simple to implement in an HTS cables and the associated termination. The trial configuration has been successfully developed. This configuration reduces the number of cryostats from three to one and lowers the total cold surface area at liquid nitrogen temperature, thus reducing the heat load per unit length. It also may have benefits for retrofitting 3-phase HTS cables into existing ducts used by conventional cables. The tri-axial cable concept is not new; a low temperature superconducting cable in a tri-axial configuration was proposed about 30 years ago. In this case the conductors were concentric tubes and the center phase conductor was split into two components 120 electrical degrees apart. More recently, the tri-axial concept is being developed for an eventual 1 GVA superconducting power link.

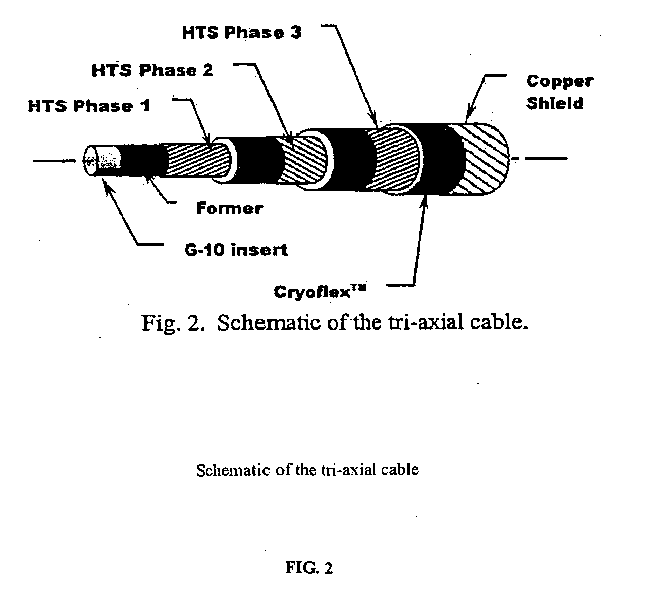

The basic cable configuration used is shown in Fig. 2. There are three concentric phase conductors separated by liquid nitrogen-impregnated dielectric tape.

For a 5-m cable, the design phase current is 1300 A and the phase-to-phase voltage is 15kV. The phase conductors are BSCCO-2223 silver-alloy tapes wound in a helical manner on a 35.6 mm former; each phase has 2 layers of these HTS tapes. The dielectric material is Cryoflex tapes immersed in liquid nitrogen. This insulation system is designed for phase-to-phase voltage between phases 1 and 2 and between phases 2 and 3, while the insulation between phase 3 and the copper shield is designed for phase-to-ground voltage is the shield is at ground potential. Note that for equal currents in phases 1-3, the current in the copper shield should be zero. The induced current in the shield for unbalanced three-phase currents was measured in the 1.5-m cable and found to be less than 10% of the largest phase current. The cable is housed in a flexible, corrugated steel tube; this tube, called the armor, contains the static liquid nitrogen used in the cold dielectric system. The liquid nitrogen used for cable cooling flows on the outside of this armor and inside the inner diameter of a flexible, steel cryostat. The cryostat has a vacuum space with superinsulation for reducing the heat load from ambient; the design heat inleak is 2 watt/m. The outer diameter of the cryostat is 143 mm.

The 1.5-m cable operated at low voltage and did not require a termination. The 5-m triaxial cable is a full-scale demonstration of the technology and requires a full-scale three-phase termination. The termination provides for ambient temperature connections to the three phases and the shield. It makes the temperature transition from liquid nitrogen temperature to ambient temperature in the three copper-pipe phase conductors as well as the copper braid shield conductor. For the phase conductors, the design approach of McFee is used to select the cross-sectional area and length of the copper pipes given the 1300 A design current. The design axial conduction loss at full current is about 50 watt/phase.

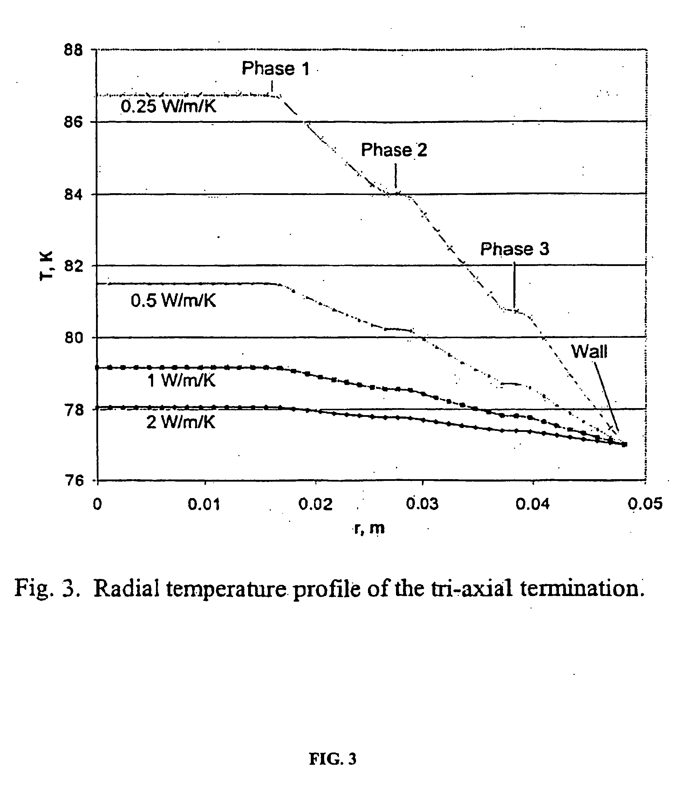

Although internal cooling is possible in the termination the preferred approach is cooling the termination from the outside. This approach has the advantage that the cooling circuit is at ground potential, but the disadvantage that adequate radial heat conduction from the three electrical phases must pass through the termination cross-section out to the flowing liquid nitrogen coolant at the wall. In particular, the dielectric material between the phase conductors and between the outer phase and shield conductor has to be a material with adequate thermal conductivity at 77 K and 300 K, as well as acceptable electrical insulation and mechanical strength performance over this temperature range. Not only must the 15kV operating voltage be accommodated, but the termination should be designed for 50 kV withstand (1 minute, dry) and 110 kV BIL voltages. A radial model of the three-phase termination was developed and evaluated using the ANSYS code. Shown in Fig. 3 is the radial temperature profile assuming various thermal conductivities (at 77 K) of the solid insulation in the range 0.25-2 watt/m-K. Since the cable's dielectric system merges with the termination it is important to keep the temperature at the cold end of the termination low enough to insure that no bubbles will nucleate in the taped dielectric. If the nitrogen were at say 5 atm (a typical lower value) then one would have to be below 94K. This is possible using the external cooling configuration.

A ceramic-filled thermosetting plastic was selected as the termination's dielectric material. In addition to having adequate electrical and mechanical properties, this material has the temperature dependent thermal conductivity shown in Fig. 4 which is consistent with the requirements of the system.

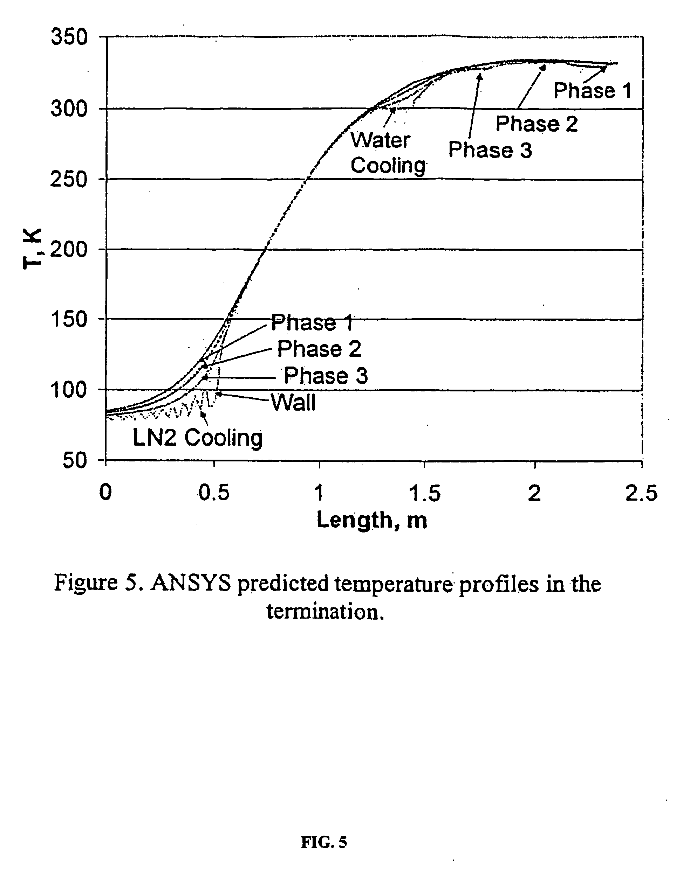

With the dielectric material in hand, it is possible to model the entire termination using ANSYS. The model can then be used to fine-tune the cooling scheme which does not meet the ideal conditions of the McFee assumptions (i.e. no radial temperature gradient and no heat input from the system beyond the termination). Fig. 5 shows the ANSYS model predictions for temperature distribution for the termination. The cable is spliced to the termination in the region to the left of zero where the temperature is low and consistent with cable operation. Large radial temperature gradients do occur in the liquid nitrogen cooled region, but this is in the termination where solid dielectric is employed. The jagged temperature in the liquid nitrogen cooled wall is from discrete cooling channels. Water (or glycol and water) cooling is provided at the ambient temperature end of the termination for two reasons: 1) to intercept some of the heat generated by warm parts of the termination during full-power operation and 2) to heat the warm end during conditions of less than full power operation or when the system is idle. The points marked Phase 1, 2 and 3 on the right-hand side of the figure designates points where power is connected to the system.

The three-phase termination is cooled separately from the 5-m triaxial cable. This was done because one of the objectives of the 5-m cable test program was a thermal measurement of ac losses while running the cable with currents in all three phases. A separate liquid nitrogen cooling path for the cable allows a more sensitive measurement of ac losses in the cable. Shown in Fig. 6 is the assembled three-phase termination showing the liquid nitrogen feed thrus for cable and termination cooling as well as the connections for cooling water near the ends of the terminations to maintain the warm end of the cable at or near 300 K.

The 5-m cable has been built and the three-phase terminations assembled. A comprehensive test program quantified the benefits of this HTS cable. The first tests after gaseous nitrogen filling and purging was a controlled cooldown from ambient temperatures monitoring temperature gradient and mechanical contractions. After a steady-state was reached at the cable operating temperature, the cable and termination heat load at a standby (zero current) condition was measured. Next dc measurements were made including V-I curves of each of the three phase conductors to determine the critical current of each phase. The response of the cable to overcurrents which simulate a short on the load side of the dc cable were measured. Next the single-phase ac losses in the phase conductors were measured for each phase separately. For this measurement both an electrical measurement (using a Rogowski coil with a lock-in amplifier) and a thermal measurement (from the liquid nitrogen flow rate and the temperature rise) were possible. Following this a thermal measurement of three-phase ac losses were made using a low-voltage, three-phase power supply that can provide 1200-1500 A/phase. The cable operated for several days at design ac voltages and currents; during this time thermal losses were measured at the design operating current. Finally the integrity of the cable and termination dielectric system were evaluated.

The termination provides a transition from room temperature to liquid nitrogen temperature for a high temperature superconducting (HTS) cable that has the three ac phases arranged concentrically around a common centerline. It incorporates a metal normal conductor shield layer outside the three superconducting phases to accommodate any shield currents from unbalanced phases. The basic cable configuration is three concentric phase conductors separated by liquid nitrogen-impregnated dielectric tape. The terminations are conductively cooled from liquid nitrogen at the termination-cable interface and optionally has another heat transfer fluid to maintain the warm end near room temperature (300K). The warm end has bushings for the three ac phases and the shield which is at ground potential.

This termination could be used by cable manufacturers and the electrical utility industry in replacing the overburdened infrastructure of conventional copper cables with oil/paper insulation with a new generation of more efficient HTS cables, especially in urban areas where the higher current density of the HTS conductors would allow increased capacity in existing underground cable tunnels.

Although the present invention has been described and illustrated in detail, it is clearly understood that the same is by way of illustration and example only and is not to be taken by way of limitation.

## Claims

1. A method of terminating a superconducting cable for alternating current having phase and neutral conductors, cooling channels, and an outer encircling shield, wherein the cable has three phase conductors and a common neutral is provided for all three phase conductors and the phase conductors and the cooling channels are arranged concentrically, **characterised in that** the method comprises the steps of connecting the three-phases to copper pipe phase conductors at ambient temperature, and connecting the shield to a copper shield conductor at ambient temperature wherein the ambient temperature end of the termination is cooled by water or by glycol and water.

2. The method of claim 1 including cooling the termination from the exterior.

3. The method of claim 1 including the step of cooling the termination from the interior.

4. The method of claim 2 wherein the cooling step is sufficient to cool the termination to a temperature low enough to ensure that no bubbles would nucleate in any dielectric insulation surrounding the superconducting material.

5. The method of claim 1 wherein the termination's dielectric material is a ceramic-filled thermosetting plastic.

6. The method of any preceding claim wherein the ambient temperature end of the termination is cooled by water.

7. The method of any preceding claim wherein the ambient temperature end of the termination is cooled by glycol and water.

8. The method of claim 2 wherein the three-phase termination is cooled separately from the superconducting cable.

**Patentansprüche**

1. Verfahren zum Abschließen eines supraleitenden Kabels für Wechselstrom mit Phasenleitern und neutralen Leitern, Kühlkanälen und einem äußeren umgebenden Schirm, wobei das Kabel drei Phasenleiter und einen gemeinsamen Nullleiter für alle drei Phasenleiter hat, und wobei die Phasenleiter und die Kühlkanäle konzentrisch angeordnet sind, **dadurch gekennzeichnet, dass** das Verfahren die Schritte umfasst: Verbinden der drei Phasen mit Kupferrohr-Phasenleitern bei Umgebungstemperatur, und Verbinden des Schilds mit einem Kupfer-Schildleiter bei Umgebungstemperatur, wobei das Umgebungstemperaturende des Abschlusses durch Wasser oder Glykol und Wasser gekühlt wird.

2. Verfahren nach Anspruch 1, mit Kühlen des Abschlusses von außen.

3. Verfahren nach Anspruch 1, mit dem Schritt des Kühlens des Abschlusses von innen.

4. Verfahren nach Anspruch 2, bei dem der Kühlschritt ausreicht, um den Abschluss auf eine Temperatur zu kühlen, die niedrig genug ist, um sicher zu stellen, dass keine Blasen in jeglicher dielektrischen Isolierung entstehen, die das supraleitende Material umgibt.

5. Verfahren nach Anspruch 1, bei dem das dielektrische Material des Abschlusses ein Keramik gefüllter duroplastischer Kunststoff ist.

6. Verfahren nach einem der vorangehenden Ansprüche, bei dem das Umgebungstemperaturende des Abschlusses durch Wasser gekühlt wird.

7. Verfahren nach einem der vorangehenden Ansprüche, bei dem das Umgebungstemperaturende des Abschlusses durch Glykol und Wasser gekühlt wird.

8. Verfahren nach Anspruch 2, bei dem der Drei-Phasen-Abschluss getrennt von dem supraleitenden Kabel gekühlt wird.


**Revendications**

1. Procédé de terminaison d'un câble supraconducteur de courant alternatif qui présente des conducteurs de phase et neutres, des canaux de refroidissement et un blindage concentrique extérieur, dans lequel le câble a trois conducteurs de phase et un neutre commun est fourni pour les trois conducteurs de phase et les conducteurs de phase et les canaux de refroidissement sont disposés de manière concentrique, **caractérisé en ce que** le procédé comprend les étapes consistant à connecter les conducteurs triphasés à des conducteurs de phase à tube de cuivre à la température ambiante, et à connecter le blindage à un conducteur de blindage en cuivre à la température ambiante, dans lequel l'extrémité à la température ambiante de la terminaison est refroidie par de l'eau ou par un mélange de glycol et d'eau.

2. Procédé selon la revendication 1, comprenant une étape consistant à refroidir la terminaison à partir de l'extérieur.

3. Procédé selon la revendication 1, comprenant une étape consistant à refroidir la terminaison à partir de l'intérieur.

4. Procédé selon la revendication 2, dans lequel l'étape consistant à refroidir est suffisante afin de refroidir la terminaison à une température suffisamment basse de façon à s'assurer qu'il n'y a aucune génération de bulle dans l'un quelconque des isolants diélectriques qui entourent le matériau supraconducteur.

5. Procédé selon la revendication 1, dans lequel le matériau diélectrique de la terminaison est une matière plastique thermodurcissable remplie de céramique.

6. Procédé selon l'une quelconque des revendications précédentes, dans lequel l'extrémité à la température ambiante de la terminaison est refroidie par de l'eau.

7. Procédé selon l'une quelconque des revendications précédentes, dans lequel l'extrémité à la température ambiante de la terminaison est refroidie par un mélange de glycol et d'eau.

8. Procédé selon la revendication 2, dans lequel la terminaison triphasée est refroidie séparément du câble supraconducteur.

**3 separate co-axial phases**

**Triad co-axial cable**    **Tri-axial cable**

Options for 3-phase, HTS cables

**FIG. 1**

**HTS Phase 3**

**HTS Phase 2**

**HTS Phase 1**

**Copper Shield**

**Former**

**G-10 insert**

**Cryoflex™**

Fig. 2. Schematic of the tri-axial cable.

Schematic of the tri-axial cable

FIG. 2

Fig. 3. Radial temperature profile of the tri-axial termination.

FIG. 3

Figure 4. Thermal conductivity of termination dielectric material.

FIG. 4

Figure 5. ANSYS predicted temperature profiles in the termination.

FIG. 5

Fig. 6. Rendering of the tri-axial termination.

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0225672 A